# EUROPÄISCHE PATENTSCHRIFT

(11) **EP 1 640 656 B1**
(45) Veröffentlichungstag und Bekanntmachung des Hinweises auf die Patenterteilung: **31.10.2012**
(21) Anmeldenummer: 05019603.9
(22) Anmeldetag: 09.09.2005
(51) Int. Cl.: F21S 8/10, F21V 8/00

(54) **Lichtleiter für Leuchten, insbesondere für Leuchten von Kraftfahrzeugen**
Light guides for lamps, expecially for vehicular lamps
Guides de lumière pour lampes, notamment pour lampes de véhicule

(30) Priorität: 24.09.2004 DE 102004046386
(43) Veröffentlichungstag der Anmeldung: 29.03.2006
(73) Patentinhaber: odelo GmbH, 71409 Schwaikheim (DE)
(72) Erfinder: Stefanov, Emil, 73728 Esslingen (DE)
(74) Vertreter: Meyer, Thorsten

(56) Entgegenhaltungen:
- EP-A- 0 935 091
- EP-A1- 0 544 332
- DE-A1- 3 123 369
- FR-A- 1 580 461
- US-A- 4 765 701

## Beschreibung

Die Erfindung betrifft einen Lichtleiter für Leuchten, insbesondere für Leuchten von Kraftfahrzeugen, nach dem Oberbegriff des Anspruches 1.

Es sind Lichtleiter bekannt, bei denen der Lichtaustrittsfläche eine Reflexionsfläche gegenüberliegt, die hintereinander angeordnete Prismen aufweist, die eine gleichbleibende, meistens symmetrische Prismenstruktur haben. Solche Lichtleiter haben den Nachteil, daß über die Länge des Lichtleiters keine gleichmäßige Leuchtdichteverteilung oder keine selektiv ausgerichtete Lichtstärkeverteilung möglich ist.

Ein Lichtleiter für Leuchten ist in EP 0 544 332 A1 beschrieben.

Der Erfindung liegt die Aufgabe zugrunde, einen Lichtleiter dieser Art so auszubilden, daß mit ihm in einfacher Weise eine gewünschte Leuchtdichteverteilung erreicht werden kann.

Diese Aufgabe wird bei einem Lichtleiter der gattungsbildenden Art erfindungsgemäß mit den kennzeichnenden Merkmalen des Anspruches 1 gelöst.

Infolge der erfindungsgemäßen Ausbildung kann eine gewünschte Leuchtdichteverteilung einfach erhalten werden. Durch entsprechende Einstellung der Größe der Reflexionsflächen wird erreicht, daß z.B. im Bereich neben der Lichtquelle der Anteil an Reflexionsflächen geringer oder größer ist als in einem entfernteren Bereich. Da im Bereich der Lichtquelle die Lichtstärke hoch ist, genügt ein verhältnismäßig kleiner Anteil an Reflexionsfläche. Die weiter entfernt von der Lichtquelle liegenden Reflexionsflächen sind prozentual in einem größeren Anteil vorhanden, um den geringeren Lichtanteil zur Auskoppelseite des Lichtleiters zu reflektieren. Auf diese Weise kann beispielsweise über die Länge der Auskoppelseite des Lichtleiters eine zumindest annähernd gleiche Leuchtdichteverteilung des abgestrahlten Lichtes erhalten werden. Es kann aber auch durch entsprechende Aufteilung des Anteils der Reflexionsflächen erreicht werden, daß das Licht über die Länge der Auskoppelseite des Lichtleiters in bestimmten Leuchtdichten austritt. Insbesondere kann infolge der erfindungsgemäßen Ausbildung das Licht gezielt so gelenkt werden, daß eine effektive Lichtauskoppelung in einem vorgeschriebenen Raumwinkelbereich erreicht wird. Dadurch wird eine gleichmäßigere mittlere Leuchtdichteverteilung entlang des Lichtleiters bezüglich verschiedener Beobachtungspositionen erreicht. Auch eine gesetzlich geforderte Lichtstärkeverteilung läßt sich auf diese Weise einfach erreichen.

Die Reflexionsstruktur wird vorteilhaft durch Prismen gebildet. Um eine gleichmäßige Leuchtdichteverteilung bei gleichzeitigem Erfüllen der Anforderungen bezüglich der Lichtstärkeverteilung zu erreichen, wird eine Funktionssteuerung verschiedener Prismenparameter vorgenommen. So können die Prismenparameter örtlich variiert werden.

Weitere Merkmale der Erfindung ergeben sich aus den weiteren Ansprüchen, der Beschreibung und den Zeichnungen.

Die Erfindung wird nachstehend anhand zweier in den Zeichnungen dargestellter Ausführungsbeispiele näher beschrieben. Es zeigt:
- Fig. 1: einen Teil eines erfindungsgemäßen Lichtleiters in Draufsicht,
- Fig. 2 bis Fig. 4: jeweils einen Lichtleiterabschnitt gemäß Fig. 1 in vergrößerter Darstellung,
- Fig. 5: eine zweite Ausführungsform eines erfindungsgemäßen Lichtleiters in einer Darstellung entsprechend Fig. 1,
- Fig. 6 bis Fig. 9: jeweils unterschiedliche Ausführungsformen von Lichtleiterabschnitten des Lichtleiters.

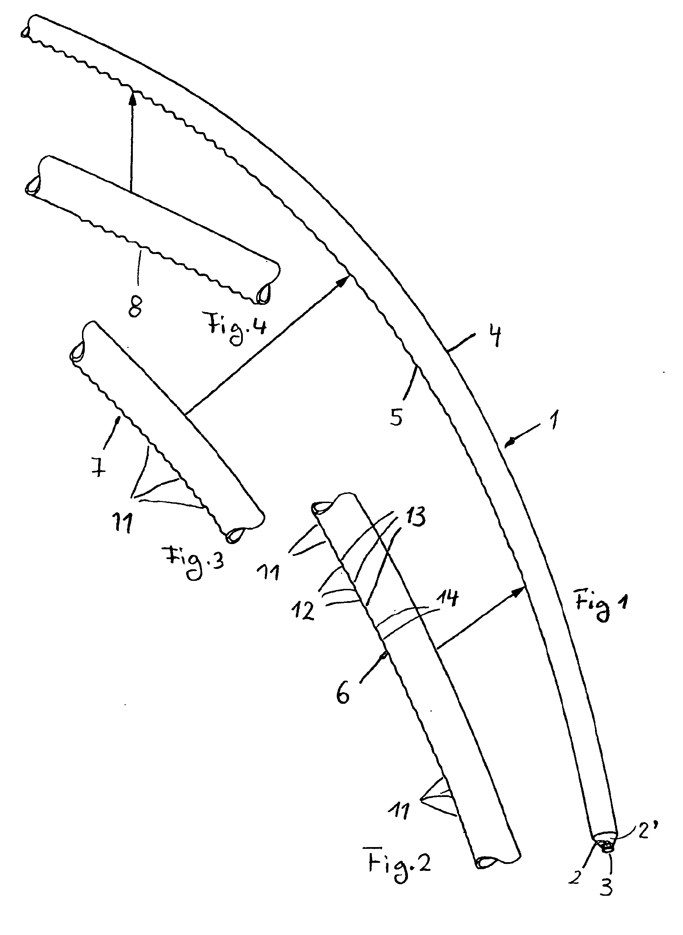

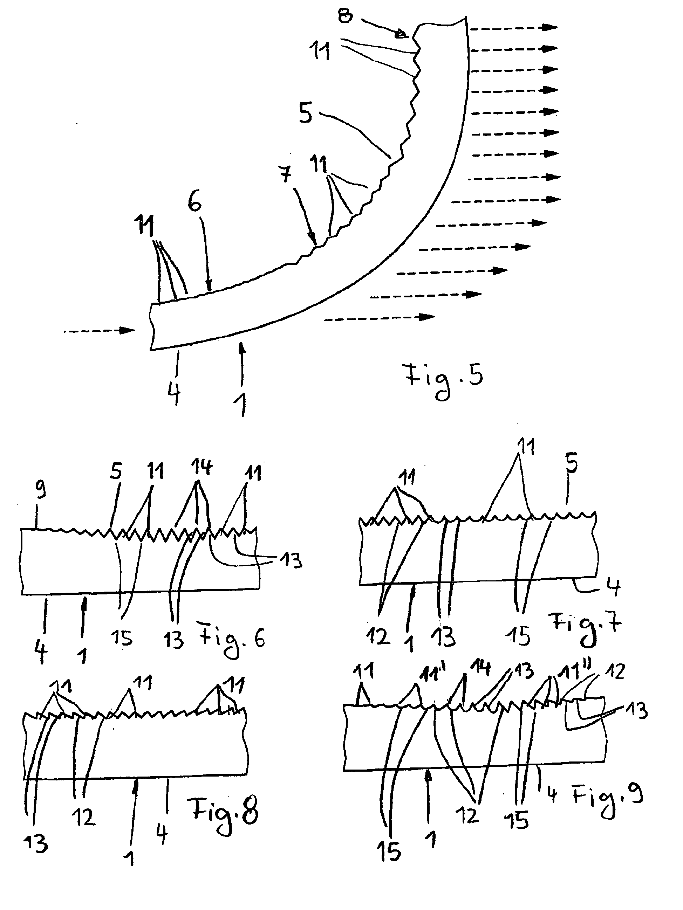

Die in den Fig. 1 und 5 dargestellten Lichtleiter 1 sind für Leuchten für Kraftfahrzeuge vorgesehen. Sie bestehen in bekannter Weise aus lichtleitendem Material und sind beispielhaft als gekrümmte Stäbe ausgebildet, deren eines Ende als Lichteintrittsfläche 2 (Fig. 1) ausgebildet ist. Sie wird durch eine Vertiefung in Form eines Kugelausschnittes gebildet, in der ein Leuchtmittel 3, vorzugsweise eine LED, liegt. Anstelle einer Leuchtdiode kann auch ein anderes Leuchtmittel, wie beispielsweise eine Glühlampe oder dergleichen, vorgesehen sein. Die konvexe Seite 4 des Lichtleiters 1 bildet eine Lichtaustrittseite, während die gegenüberliegende konkave Außenseite eine Reflexionsseite 5 bildet. An der Reflexionsseite 5 werden die vom Leuchtmittel 3 ausgesandten Lichtstrahlen zur Lichtaustrittsseite 4 reflektiert. Die Reflexionsseite 5 weist über ihre Länge unterschiedlich ausgebildete Profilierungen bzw. Profilabschnitte 6 bis 8 auf, deren Ausbildungen in den Fig. 2 bis 4 bzw. 6 bis 9 näher dargestellt sind.

Der Lichtleiter 1 kann auch so ausgebildet sein, daß das Leuchtmittel 3, insbesondere die LED, vom Material des Lichtleiters 1 umspritzt ist. In diesem Fall bildet das entsprechende Ende des Lichtleiters 1 keine Lichteintrittsfläche 2, da das Licht innerhalb des Lichtleiters 1 aus dem Leuchtmittel 3 austritt. Im folgenden werden Lichtleiter 1 mit Lichteintrittsflächen 2 beschreiben. Die beschriebenen Ausbildungen der Lichtleiter 1 gelten aber auch für Ausführungsformen, bei denen das Leuchtmittel 3 vom Material des Lichtleiters 1 umspritzt ist.

In den Ausführungsbeispielen sind die Profilabschnitte 6 bis 8 durch einzelne, in Längsrichtung des Lichtleiters 1 aneinanderschließende Prismen 11 gebildet; selbstverständlich können anstelle der Prismen auch andere Reflexions- bzw. Streukörper vorgesehen sein. Vorzugsweise unterscheiden sich die Prismen der Lichtleiter-Profilabschnitte 6 bis 8 beispielsweise durch ihre Prismenhöhe, Basisweite, Asymmetrie bzw. Neigung ihrer Seitenflächen 12, 13, der Abrundung ihrer Kanten 14 oder der Geometrie der Einkuppelstellen. Alle oder nur einzelne dieser Parameter können voneinander abweichen. Außerdem kann die Lage der Lichtquelle 3 in bezug auf die Reflexisionskörper bzw. ihre Seitenflächen 12, 13 unterschiedlich sein. Bei sämtlichen Ausführungsformen sind die Profilabschnitte so angeordnet und ausgebildet, daß ihre Prismen mit zunehmender Entfernung von der Lichteintrittsfläche 2 bzw. vom Leuchtmittel 3 das auftreffende Licht stärker reflektieren, um so die in zunehmender Entfernung vom Leuchtmittel 3 sich verringernde Lichtintensität des austretenden Lichtes auszugleichen, so daß eine gleichmäßigere Lichtverteilung über die Länge des Lichtleiters 1 erreicht wird.

An die Lichteintrittsfläche 2 schließt ein Totalreflektorbereich 2' an, der sich von der Lichteintrittsfläche 2 aus erweitert und dessen Mantellinien konvex gekrümmt sind. Die vom Leuchtmittel 3 ausgehenden Strahlen treffen teilweise auf die Wandung des Totalreflektorbereiches 2', an der sie total reflektiert werden. Der Bereich 2' geht in einen Profilabschnitt 6 über (Fig. 2), der eine wellenförmige Profilierung mit schwach ausgeprägten Prismen aufweist, die also geringe Prismenhöhe haben und deren Seitenflächen 12, 13 mit relativ großem stumpfen Winkel zueinander verlaufen, so daß die Basisweite dieser Prismen 11 entsprechend groß ist. Die Seitenflächen 12, 13 können abgerundet oder auch über Kanten 14 ineinander übergehen. Vorzugsweise nimmt auch innerhalb dieses Profilabschnittes 6 zumindest die Prismenhöhe der Prismen 11 mit zunehmender Entfernung vom Leuchtmittel 3 bzw. der Lichteintrittsfläche 2 zu.

Im Bereich des Profilabschnittes 7 gemäß Fig. 3 sind die Prismen 11 noch stärker ausgeprägt als im Profilabschnitt 6. Die Prismen 11 haben mit zunehmender Entfernung von der Lichteintrittsseite 2 und mit zunehmendem Abstand vom Profilabschnitt 6 eine größere Prismenhöhe und kleinere Basisweite, so daß ihre Seitenflächen 12, 13 unter kleinerem spitzen Winkel zueinander liegen als im Profilabschnitt 6. Im Bereich des Profilabschnittes 8 nimmt die Prismenhöhe weiter zu. Auch die Basisweite kann weiter abnehmen. Es ist auch möglich, die Basisweite unverändert zu lassen.

In allen Profilabschnitten 6 bis 8 können auch asymmetrisch ausgebildete Prismen 11 vorhanden sein. Solche asymmetrisch ausgebildete Prismen, die zum Beispiel von der Lichteintrittsfläche 2 weg oder zu dieser hingeneigt sind, sind in den Fig. 6 bis 9 dargestellt, wie noch erläutert wird. Außerdem können die Prismen 11 mit scharfen oder auch abgerundeten Kanten ausgebildet sein. Durch die mit zunehmendem Abstand von der Lichteintrittsfläche 2 stärker ausgeprägte Profilierung der Reflexionsseite 5 kann die in dieser Richtung abnehmende Lichtstärke und Leuchtdichte durch eine Erhöhung des Anteils der Reflexionsflächen 12, 13 der Profilabschnitte 6 bis 8 an der gesamten Reflexionsfläche erhöht werden.

Wie die Fig. 5 bis 9 zeigen, können aufeinanderfolgende Prismen 11 auch deutlich unterschiedliche Höhen, Neigungen und/oder Kantenausbildungen haben.

Wie Fig. 6 zeigt, schließen an einen Bereich 9 mit Prismen geringer Höhe, ähnlich der gemäß Fig. 2 Prismen 11 an, deren Prismenhöhe mit zunehmendem Abstand von der Lichteintrittsseite 2 stark zunimmt und die geringe Basisweite sowie scharfe freie Kanten 14 und einen scharfkantig ausgebildeten Nutgrund 15 aufweisen. Die relativ hohen Prismen 11 gehen dann in weniger hohe Prismen 11 über, die gleiche Basisweite und deren Seitenflächen 12, 13 unterschiedliche Höhe haben. In diesem Profilbereich hat die Reflexionsseite 5 einen asymmetrischen Verlauf, wodurch eine jeweils optimale Leuchtdichteverteilung erreicht und die Auskopplungsrichtung für das austretende Licht je nach Geometrieverhältnissen des Lichtleiters beliebig eingestellt werden können. Bei dieser Ausführung wird dies durch die funktionsgesteuerte Prismenhöhe erreicht.

Fig. 7 zeigt wieder einen Profilabschnitt der Reflexionsseite 5, bei dem die Prismen 11 unterschiedlich ausgebildet sind, indem eine funktionsgesteuerte Prismenrundung eingesetzt wird. In einem ersten Bereich haben die Prismen 11 ähnlich denen in Fig. 6 einen scharfkantigen Übergang und teilweise unterschiedlich lange Seitenflächen 12, 13, während in einem anschließenden Abschnitt die dort vorgesehenen Prismen 11 geringere Prismenhöhe haben, jedoch in ihrem Basisbereich bzw. Nutgrund 15 teilkreisförmig abgerundet sind.

Fig. 8 zeigt einen Profilabschnitt mit funktionsgesteuerter Prismenneigung. In diesem Profilabschnitt sind die Prismen 11 unterschiedlich geneigt. In einem ersten Abschnitt sind die Prismen in der Zeichnung nach links und in einem rechten Abschnitt der Fig. 8 nach rechts geneigt. Bei den dazwischen liegenden Prismen 11 ist die unterschiedlich lange Ausbildung der Prismenseitenflächen 12, 13 weniger stark ausgeprägt. Bei dem linken Abschnitt haben die einen Prismenseitenflächen 12 größere Länge als die anderen Prismenseitenflächen 13. Im Bereich zwischen den in unterschiedlichen Richtungen geneigten Prismen 11 sind im Ausführungsbeispiel einige Prismen 11 vorgesehen, die etwa symmetrisch ausgebildet sind.

Bei der Ausführungsform nach Fig. 9 wird eine Kombination funktionsgesteuerter Prismenparameter, wie Höhe, Neigung und Rundung, eingesetzt. An einen Bereich mit nur sehr geringer Profilhöhe schließen Prismen an, die zunehmend ausgeprägter, also größere Prismenhöhe haben und asymmetrisch ausgebildet sind. An diesen Übergangsbereich schließt dann wieder ein Bereich mit Prismen an, die ähnlich wie im ersten Bereich nur geringe Höhe haben, also kaum erkennbar sind. Die an den in Fig. 9 linken, schwach ausgeprägten Prismenbereich anschließenden Prismen 11' haben einen abgerundeten Nutgrund 15, gehen aber über scharfe Kanten 14 in die Seitenflächen 12, 13 über. Diese asymmetrisch ausgebildeten Prismen 11' sind in Fig. 9 nach rechts geneigt. Dieser nach rechts geneigte Prismenteil 11' geht in einen nach links geneigten Prismenabschnitt über, in dem die Prismen 11" einen scharfkantigen Nutgrund 15 haben. Ihre Seitenflächen 13 sind länger als die anderen Seitenflächen 12. Im Anschlußbereich an die Prismen 11' haben die Prismen 11" größere Prismenhöhe, die dann nach rechts in Fig. 9 abnimmt. Die Übergänge zwischen den unterschiedlichen Prismenbereichen erfolgen vorteilhaft fließend, können aber bei entsprechenden Anwendungsfällen auch sprunghaft sein.

Selbstverständlich sind beliebige, durch Ändern der Prismenhöhe, -neigung, -rundung, -schrittweite usw. Abwandlungen der Prismenform und Anordnung denkbar. Anstelle der Prismen können, wie bereits erwähnt, auch andere Reflexionskörper vorgesehen sein. Durch entsprechende Ausbildung und Anordnung dieser Reflexionskörper kann die Lichtverteilung und Lichtstärke bzw. Leuchtdichte so verbessert werden, daß der Lichtleiter 1 gleichmäßig Licht abstrahlt. In jedem Fall ist der Anteil der Reflexionsfläche des Lichtleiters 1 in seinem an die Lichteintrittsfläche 2 anschließenden Teil, bezogen auf die Gesamtreflexionsfläche des Lichtleiters 1, kleiner als in den übrigen Bereichen. Damit in den weiter entfernt von der Lichteintrittsseite 2 bzw. vom Leuchtmittel 3 liegenden Bereichen trotz abnehmender Leuchtdichte ausreichend Licht nach außen abgestrahlt wird, ist dort der Anteil der Reflexionsfläche an der Gesamtreflexionsfläche größer als im Lichteintrittsbereich.

Die beschriebenen Ausführungsbeispiele sind nicht beschränkend zu verstehen, sondern sollen veranschaulichen, daß durch gezielte Steuerung von Lichtleiterparametern, wie Prismenhöhe und -basisweite, Prismenasymmetrie (-neigung) und Prismenkantenradien, Querschnitts- oder Einkoppelstellen-Geometrie, Lichtquellenposition und dergleichen, eine Anpassung an den gewünschten Einsatzzweck möglich ist. Die unterschiedlichen Gestaltungen der Prismen lassen sich durch geeignete Funktionsverteilungen erreichen, wie zum Beispiel Polynome höheren Grades, Trigonometriefunktionen, Exponentialfunktionen und/oder andere kontinuierliche oder diskontinuierliche Funktionen sowie Kombinationen dieser Funktionen. Dadurch wird die Lichtstärke- und Leuchtdichteverteilung besser an vorgegebene Anforderungen angepaßt, insbesondere werden Lichtauskoppelungseffizienz und Wahrnehmung und ihre Wirkung gezielt verbessert.

Die Erzeugungsparameter benachbarter Auskopplungselemente 11 variieren so, daß optimierte bzw. optimale Funktionsverteilungen erreicht werden.

Die beschriebenen Lichtleiterparameter können unabhängig voneinander variiert werden. So kann nur ein Lichtleiterparameter geändert bzw. variiert werden. Es ist aber auch möglich, zwei oder mehr Lichtleiterparameter zu verändern. Hierbei sind unterschiedlichste Kombinationen von Lichtleiterparametern möglich.

Die erfindungsgemäßen Lichtleiter können nicht nur bei Leuchten von Kraftfahrzeugen, sondern auch bei Innen- und Außenbeleuchtungen von Markierungs- oder Integratorleuchten eingesetzt werden. Es sind auch beliebige Freiformlichtleiter denkbar, die beispielsweise für die Werbung oder Signalisation eingesetzt werden.

Wie sich aus den beschriebenen Ausführungsbeispielen ergibt, können eine gezielte Lichtstärkeverteilung, eine effektive Lichtauskoppelung in einem vorgeschriebenen Raumwinkelbereich und eine gleichmäßige Leuchtdichteverteilung entlang des Lichtleiters 1 bezüglich verschiedener Beobachtungspositionen eingestellt werden.

Die Prismenbasisweite liegt vorteilhaft bei nur etwa 1 mm. Schon bei einem Abstand von etwa 1,5 m sind die Prismen dann vom menschlichen Auge nicht aufzulösen. Der Lichtleiter 1 wirkt dann wie ein glatter, durchgehender Stab.

## Patentansprüche

1. Lichtleiter für Leuchten, vorzugsweise für Leuchten von Kraftfahrzeugen, mit wenigstens einer Lichtquelle (3), deren abgestrahltes Licht über wenigstens einen Teil der Länge an einer Lichtaustrittsseite (4) durch eine Reflexionsstruktur (5) aus dem Lichtleiter (1) herausgelenkt wird, wobei der Anteil an Reflexionsfläche (12, 13) eines der Lichtquelle (3) näher liegenden Bereichs (6 bis 8) der Reflexionsstruktur an der Gesamtreflexionsfläche des Lichtleiters (1) unterschiedlich gegenüber dem Anteil der Reflexionsfläche (12, 13) eines von der Lichtquelle (3) weiter entfernt liegenden Bereichs (6 bis 8) ist, und die Reflexionsstruktur durch Prismen (11, 11', 11") gebildet ist, wobei die Prismen (11, 11', 11") zumindest in den unterschiedliche Anteile an der Gesamtreflexionsfläche aufweisenden Bereichen (6 bis 8) eine unterschiedliche Querschnittsform haben mit jeweils
unterschiedlichen Höhen und Neigungen,
**dadurch gekennzeichnet,**
**dass** die Prismen (11, 11', 11") zumindest in den unterschiedliche Anteile an der Gesamtreflexionsfläche aufweisenden Bereichen (6 bis 8) zusätzlich eine unterschiedliche Querschnittsform haben mit jeweils unterschiedlichen Kantenradien und/ in ihrem Basisbereich (15) unterschiedlichen teilkreisförmigen Rundungen

2. Lichtleiter nach Anspruch 1, **dadurch gekennzeichnet, dass** eine konvexe Seite (4) des Lichtleiters (1) die Lichtaustrittsseite bildet, und eine gegenüberliegende konkave Seite die Reflexionsseite (5) bildet.

3. Lichtleiter nach Anspruch 1 oder 2, **dadurch gekennzeichnet, dass** der Anteil an Reflexionsfläche (12, 13) stetig zunimmt.

4. Lichtleiter nach Anspruch 1, 2 oder 3, **dadurch gekennzeichnet, dass** der Anteil an Reflexionsfläche (12, 13) abschnittsweise zunimmt.

5. Lichtleiter nach einem der vorhergehenden Ansprüche, **dadurch gekennzeichnet, dass** der Anteil an Reflexionsfläche (12, 13) in einem Abschnitt (6 bis 8) des Lichtleiters (1) zunimmt.

6. Lichtleiter nach einem der vorhergehenden Ansprüche, **dadurch gekennzeichnet, dass** die Prismen (11, 11', 11 "), die näher bei der Lichtquelle (3) liegen, kleinere Reflexionsfläche (12, 13) haben, als größeren Abstand von der Lichtquelle (3) aufweisende Prismen (11, 11', 11").

7. Lichtleiter nach einem der vorhergehenden Ansprüche, **dadurch gekennzeichnet, dass** die Reflexionsfläche (12, 13) benachbarter Prismen (11, 11', 11") mit zunehmendem Abstand von der Lichtquelle (3) zunimmt.

8. Lichtleiter nach einem der vorhergehenden Ansprüche, **dadurch gekennzeichnet, dass** die Prismen (11, 11', 11") innerhalb eines Bereichs (6 bis 8) des Lichtleiters (1) gleich große Reflexionsflächen (12, 13) haben, und dass die Größe der Reflexionsflächen (12, 13) benachbarter Bereiche (6 bis 8) unterschiedlich ist.

9. Lichtleiter nach einem der vorhergehenden Ansprüche, **dadurch gekennzeichnet, dass** die Prismen (11, 11', 11") zusätzlich funktionsgesteuerte, unterschiedliche Basisweiten aufweisen.

10. Lichtleiter nach einem der vorhergehenden Ansprüche, **dadurch gekennzeichnet, dass** einander benachbarte Reflexionsflächen spitzwinklig ineinander übergehen.

11. Lichtleiter nach einem der vorhergehenden Ansprüche, **dadurch gekennzeichnet, dass** einander benachbarte Reflexionsflächen abgerundet ineinander übergehen.

12. Lichtleiter nach einem der vorhergehenden Ansprüche, **dadurch gekennzeichnet, dass** die Prismen (11, 11', 11") in gleicher Richtung zueinander geneigt sind.

13. Lichtleiter nach einem der vorhergehenden Ansprüche, **dadurch gekennzeichnet, dass** die Prismen (11, 11', 11") in entgegengesetzter Richtung zueinander geneigt sind.

14. Lichtleiter nach einem der vorhergehenden Ansprüche, **dadurch gekennzeichnet, dass** die Prismen (11, 11', 11") symmetrische Querschnittsform haben.

15. Lichtleiter nach einem der Ansprüche 1 bis 13, **dadurch gekennzeichnet, dass** die Prismen (11, 11', 11 ") asymmetrische Querschnittsform haben.

## Claims

1. A light guide for lighting fixtures, preferably for lighting fixtures of motor vehicles, with at least one light source (3), the radiated light of which is deflected out of the light guide (1) over at least a part of the length on a light exit side (4) by means of a reflecting structure (5), wherein
the proportion of reflecting surface (12, 13) of a region (6 to 8) of the reflecting structure on the total reflecting surface of the light guide (1) located nearer to the light source (3) differs from the proportion of the reflecting surface, (12, 13) of a region (6 to 8) located further away from the light source (3), and the reflecting structure is formed by means of prisms (11, 11', 11"), wherein
the prisms (11, 11', 11"), at least in the regions (6 to 8) having different proportions of the total reflecting surface, have a different cross-sectional shape with different heights and inclinations in each case,
**characterised in that** the prisms (11, 11', 11"), at least in the regions (6 to 8) having different proportions of the total reflecting surface, in addition have a different cross-sectional shape with different edge radii in each case, and in their base regions (15) have circular arc shapes of different curvatures.

2. The light guide in accordance with Claim 1,
**characterised in that** a convex side (4) of the light guide (1) forms the light exit side, and an opposing concave side forms the reflecting side (5).

3. The light guide in accordance with Claim 1 or 2,
**characterised in that** the proportion of reflecting surface (12, 13) increases steadily.

4. The light guide in accordance with Claim 1, 2, or 3
**characterised in that** the proportion of reflecting surface (12, 13) increases in some sections.

5. The light guide in accordance with one of the preceding claims,
**characterised in that** the proportion of reflecting surface, (12, 13) increases in a section (6 to 8) of the light guide (1).

6. The light guide in accordance with one of the preceding claims,
**characterised in that** the prisms (11, 11', 11") that are located closer to the light source (3) have a smaller reflecting surface (12, 13) than prisms (11, 11', 11") at a greater distance from the light source (3).

7. The light guide in accordance with one of the preceding claims,
**characterised in that** the reflecting surface (12, 13) of adjacent prisms (11, 11', 11") increases with increasing distance from the light source (3).

8. The light guide in accordance with one of the preceding claims,
**characterised in that** the prisms (11, 11', 11") within one region (6 to 8) of the light guide (1) have reflecting surfaces (12, 13) of equal size, and **in that** the sizes of the reflecting surfaces (12, 13) of adjacent regions (6 to 8) differ.

9. The light guide in accordance with one of the preceding claims,
**characterised in that** the prisms (11, 11', 11") in addition have different, function-controlled, base widths.

10. The light guide in accordance with one of the preceding claims,
**characterised in that** reflecting surfaces that are adjacent to one another translate into one another at an acute angle.

11. The light guide in accordance with one of the preceding claims,
**characterised in that** reflecting surfaces that are adjacent to one another translate into one another in a radiused manner.

12. The light guide in accordance with one of the preceding claims,
**characterised in that** the prisms (11, 11', 11") are inclined relative to one another in the same direction.

13. The light guide in accordance with one of the preceding claims,
**characterised in that** the prisms (11, 11', 11") are inclined relative to one another in opposing directions.

14. The light guide in accordance with one of the preceding claims,
**characterised in that** the prisms (11, 11', 11") have a symmetrical cross-sectional shape.

15. The light guide in accordance with one of the Claims 1 to 13,
**characterised in that** the prisms (11, 11', 11") have an asymmetrical cross-sectional shape.

## Revendications

1. Guide de lumière pour des lampes, de préférence pour des lampes de véhicules, comprenant au moins une source de lumière (3), dont la lumière diffusée est dirigée sur au moins une partie de la longueur sur un côté de sortie de lumière (4) par une structure de réflexion (5) à la sortie du guide de lumière (1), la fraction de la surface de réflexion (12, 13) d'une zone (6 à 8), située plus près de la source de lumière (3), de la structure de réflexion par rapport à la surface de réflexion totale du guide de lumière (1) étant différente par rapport à la fraction de la surface de réflexion (12, 13) d'une zone (6 à 8) davantage éloignée de la source de lumière (3), et la structure de réflexion étant formée par des prismes (11, 11', 11''), les prismes (11, 11', 11'') ayant une forme de section différente au moins dans les zones (6 à 8) présentant différentes fractions de la surface de réflexion totale et ayant des hauteurs et des pentes respectivement différentes,
**caractérisé en ce que**
les prismes (11, 11', 11'') ont en supplément une forme de section différente au moins dans les zones (6 à 8) présentant différentes fractions de la surface de réflexion totale avec des rayons d'arête respectivement différents et dans leur zone de base (15) différents arrondis en forme de cercle partiel.

2. Guide de lumière selon la revendication 1, **caractérisé en ce qu'**un côté (4) convexe du guide de lumière (1) forme le côté de sortie de lumière, et un côté concave opposé forme le côté de réflexion (5).

3. Guide de lumière selon la revendication 1 ou 2, **caractérisé en ce que** la fraction de la surface de réflexion (12, 13) augmente constamment.

4. Guide de lumière selon la revendication 1, 2 ou 3, **caractérisé en ce que** la fraction de la surface de réflexion (12, 13) augmente par tronçon.

5. Guide de lumière selon l'une des revendications précédentes, **caractérisé en ce que** la fraction de la surface de réflexion (12, 13) augmente dans un tronçon (6 à 8) du guide de lumière (1).

6. Guide de lumière selon l'une des revendications précédentes, **caractérisé en ce que** les prismes (11, 11', 11''), qui sont plus près sur la source de lumière (3), ont une surface de réflexion (12, 13) plus petite que des prismes (11, 11', 11'') présentant une distance plus grande à la source de lumière (3).

7. Guide de lumière selon l'une des revendications précédentes, **caractérisé en ce que** la surface de réflexion (12, 13) de prismes (11, 11', 11'') voisins augmente avec l'augmentation de la distance à la source de lumière (3).

8. Guide de lumière selon l'une des revendications précédentes, **caractérisé en ce que** les prismes (11, 11', 11'') ont des surfaces de réflexion (12, 13) de même grandeur à l'intérieur d'une zone (6 à 8) du guide de lumière (1), et **en ce que** la grandeur des surfaces de réflexion (12, 13) de zones voisines (6 à 8) est différente.

9. Guide de lumière selon l'une des revendications précédentes, **caractérisé en ce que** les prismes (11, 11', 11'') présentent en supplément des largeurs de base commandées par fonction et différentes.

10. Guide de lumière selon l'une des revendications précédentes, **caractérisé en ce que** des surfaces de réflexion respectivement voisines s'imbriquent les unes dans les autres en formant un angle aigu.

11. Guide de lumière selon l'une des revendications précédentes, **caractérisé en ce que** des surfaces de réflexion voisines les unes des autres s'imbriquent les unes dans les autres de façon arrondie.

12. Guide de lumière selon l'une des revendications précédentes, **caractérisé en ce que** les prismes (11, 11', 11'') sont inclinés dans la même direction les uns par rapport aux autres.

13. Guide de lumière selon l'une des revendications précédentes, **caractérisé en ce que** les prismes (11, 11', 11'') sont inclinés les uns par rapport aux autres dans une direction opposée.

14. Guide de lumière selon l'une des revendications précédentes, **caractérisé en ce que** les prismes (11, 11', 11'') ont une forme de section symétrique.

15. Guide de lumière selon l'une des revendications 1 à 13, **caractérisé en ce que** les prismes (11, 11', 11'') ont une forme de section asymétrique.
